# EUROPEAN PATENT SPECIFICATION

(11) **EP 3 779 739 B1**
(45) Date of publication and mention of the grant of the patent: **30.03.2022**
(21) Application number: 19803498.5
(22) Date of filing: 08.05.2019
(51) Int. Cl.: G06F 21/32, G06K 9/00, G06K 9/62, G06Q 20/40

(54) **OBJECT VERIFICATION METHOD, DEVICE AND SYSTEM**
OBJEKTVERIFIZIERUNGSVERFAHREN, -VORRICHTUNG UND -SYSTEM
PROCÉDÉ, DISPOSITIF ET SYSTÈME DE VÉRIFICATION D'OBJETS

(30) Priority: 14.05.2018 CN 201810458318
(43) Date of publication of application: 17.02.2021
(73) Proprietor: ALIBABA GROUP HOLDING LIMITED, George Town, Grand Cayman (KY)
(72) Inventor: CHEN, Jing, Hangzhou, Zhejiang 311121 (CN)
(74) Representative: Branderhorst, Matthijs Pieter Arie
(86) International application number: PCT/CN2019/085938
(87) International publication number: WO 2019/218905

(56) References cited:
- EP-A1- 2 688 039
- EP-A2- 1 291 807
- CN-A- 107 103 218
- CN-A- 107 491 674
- CN-A- 107 516 105
- JP-A- 2004 078 686
- US-A1- 2014 050 373

## Description

This application claims the priority of Chinese Patent Application No. 201810458318.2, filed May 14, 2018, entitled "Object Verification Method, Device and System".

### TECHNICAL FIELD

This application relates to the field of image recognition and, more specifically, to an object verification method, device and system.

### BACKGROUND

Traditional identity verification techniques based on passwords, SMS messages or the like have the disadvantages of low security, poor user experience and so on. By contrast, identity verification techniques based on various biometric traits have the advantages of security, convenience and quickness, and thus have found extensive use in our daily life along with the rapidly developing Internet technology. As one of such identity verification techniques based on biometric traits, facial recognition has been used in a wide range of daily life applications such as payment and office attendance monitoring.

However, existing facial recognition techniques often fail in distinguishing between highly similar persons (e.g., twins), leaving chances, for example, for a child to cheat a face-recognition system in his/her father's payment tool to make a payment for himself/herself, or for one of twin sisters to cheat a face-recognition system of the other's company to pretend her attendance. In particular, in convenient payment applications, facial misrecognition can lead to a higher risk of financial loss.

To date, no effective solution has been proposed for the low-accuracy problem of the existing facial recognition techniques.

EP1291807 describes a person recognition apparatus which performs a comparison between acquired authentication data and data stored in a dictionary. The apparatus denies authentication where the similarity between the acquired data and dictionary data similar to the acquired data does not exceed a threshold.

### SUMMARY OF THE INVENTION

In embodiments of the present application, an object verification method, an object verification device and an object verification system are provided, in order to at least solve the low-accuracy problem in the existing facial recognition techniques.

According to one aspect of embodiments of the present invention, it provides an object verification method, comprising:
capturing image information of a first object;
comparing the captured image information of the first object with images satisfying predefined conditions to obtain a comparison result, wherein the images satisfying predefined conditions comprise a pre-stored image of the first object and a pre-stored image of a second object having similar features to the first object, the step of comparing comprising
   calculating similarity between the captured image information of the first object and the pre-stored image of the first object to obtain a first similarity value; and
   calculating similarity between the captured image information of the first object and the pre-stored image of the second object to obtain a second similarity value,
   wherein the first similarity value is configured to represent self-similarity of the first object, and the second similarity value is configured to represent a similarity between the first object and the second object;
wherein the pre-stored image of the first object comprises a plurality of first sub-images captured at different times, and calculating similarity between the captured image information of the first object and the pre-stored image of the first object to obtain the first similarity value comprises:
   calculating similarity between the image information of the first object and each of the first sub-images to obtain a plurality of first sub-similarity values and calculating an average value of the plurality of first sub-similarity values as the first similarity value; or
   calculating similarity between the image information of the first object and each of the first sub-images to obtain a plurality of first sub-similarity values and selecting a maximum value of the plurality of first sub-similarity values as the first similarity value; or
   calculating similarity between the image information of the first object and each of the first sub-images to obtain a plurality of first sub-similarity values and calculating a maximum variance of the plurality of first sub-similarity values as the first similarity value; or
   calculating similarity between the image information of the first object and each of the first sub-images to obtain a plurality of first sub-similarity values and selecting a minimum value of the plurality of first sub-similarity values as the first similarity value; or
   calculating similarity between the image information of the first object and each of the first sub-images to obtain a plurality of first sub-similarity values and calculating a minimum variance of the plurality of first sub-similarity values as the first similarity value; and
determining whether the first object passes the verification based on the comparison result.

According to another aspect of embodiments of the present invention, it provides an object verification device, comprising:
a capture module configured to capture image information of a first object;
a comparison module configured to compare the captured image information of the first object with images satisfying predefined conditions to obtain a comparison result, wherein the images satisfying predefined conditions comprise a pre-stored image of the first object and a pre-stored image of a second object having similar features to the first object, the comparison comprising
   calculating similarity between the captured image information of the first object and the pre-stored image of the first object to obtain a first similarity value; and calculating similarity between the captured image information of the first object and the pre-stored image of the second object to obtain a second similarity value,
   wherein the first similarity value is configured to represent self-similarity of the first object, and the second similarity value is configured to represent a similarity between the first object and the second object;
wherein the pre-stored image of the first object comprises a plurality of first sub-images captured at different times, and calculating similarity between the captured image information of the first object and the pre-stored image of the first object to obtain the first similarity value comprises
   calculating similarity between the image information of the first object and each of the first sub-images to obtain a plurality of first sub-similarity values and calculating an average value of the plurality of first sub-similarity values as the first similarity value; or
   calculating similarity between the image information of the first object and each of the first sub-images to obtain a plurality of first sub-similarity values and selecting a maximum value of the plurality of first sub-similarity values as the first similarity value; or
   calculating similarity between the image information of the first object and each of the first sub-images to obtain a plurality of first sub-similarity values and calculating a maximum variance of the plurality of first sub-similarity values as the first similarity value; or
   calculating similarity between the image information of the first object and each of the first sub-images to obtain a plurality of first sub-similarity values and selecting a minimum value of the plurality of first sub-similarity values as the first similarity value; or
   calculating similarity between the image information of the first object and each of the first sub-images to obtain a plurality of first sub-similarity values and calculating a minimum variance of the plurality of first sub-similarity values as the first similarity value; and
a determination module configured to determine whether the first object passes the verification based on the comparison result.

According to a further aspect of embodiments of the present invention, it provides a storage medium, configured to store a program, wherein a device comprising the storage medium is configured to carry out following steps when the program is executed:
capturing image information of a first object;
comparing the captured image information of the first object with images satisfying predefined conditions to obtain a comparison result, wherein the images satisfying predefined conditions comprise a pre-stored image of the first object and a pre-stored image of a second object having similar features to the first object, the step of comparing comprising
   calculating similarity between the captured image information of the first object and the pre-stored image of the first object to obtain a first similarity value; and calculating similarity between the captured image information of the first object and the pre-stored image of the second object to obtain a second similarity value,
   wherein the first similarity value is configured to represent self-similarity of the first object, and the second similarity value is configured to represent a similarity between the first object and the second object;
wherein the pre-stored image of the first object comprises a plurality of first sub-images captured at different times, and calculating similarity between the captured image information of the first object and the pre-stored image of the first object to obtain the first similarity value comprises:
   calculating similarity between the image information of the first object and each of the first sub-images to obtain a plurality of first sub-similarity values and calculating an average value of the plurality of first sub-similarity values as the first similarity value; or
   calculating similarity between the image information of the first object and each of the first sub-images to obtain a plurality of first sub-similarity values and selecting a maximum value of the plurality of first sub-similarity values as the first similarity value; or
   calculating similarity between the image information of the first object and each of the first sub-images to obtain a plurality of first sub-similarity values and calculating a maximum variance of the plurality of first sub-similarity values as the first similarity value; or
   calculating similarity between the image information of the first object and each of the first sub-images to obtain a plurality of first sub-similarity values and selecting a minimum value of the plurality of first sub-similarity values as the first similarity value; or
   calculating similarity between the image information of the first object and each of the first sub-images to obtain a plurality of first sub-similarity values and calculating a minimum variance of the plurality of first sub-similarity values as the first similarity value; and
determining whether the first object passes the verification based on the comparison result. In embodiments of the present application, multiples comparisons are performed. Comparison results obtained by comparing captured image information of a first object with images satisfying predefined conditions serve as a basis for determining whether the first object passes the verification. The images satisfying predefined conditions include a pre-stored image of the first object and a pre-stored image of a second object having similar features to the first object. In this way, a reduced facial misrecognition rate is achieved, resulting in improved information security. This solves the low-accuracy problem in conventional facial recognition techniques.

### BRIEF DESCRIPTION OF THE DRAWINGS

The accompanying drawings described herein constitute a part of this application and are presented for the purpose of facilitating an understanding of the application. Exemplary embodiments of this application and the description thereof are illustrative of, rather than unduly limiting upon, the application. In the drawings:
Fig. 1 is a flowchart of an object verification method according to an embodiment of the present application;
Fig. 2 is a flowchart of operations of an optional facial recognition product based on an object verification method according to an embodiment of the present application;
Fig. 3 is a flowchart of an object verification method according to a preferred embodiment of the present application;
Fig. 4 is a structural schematic of an object verification device according to an embodiment of the present application;
Fig. 5 is a block diagram showing the hardware architecture of a computer terminal according to an embodiment of the present application; and
Fig. 6 is a flowchart of an object verification method according to an embodiment of the present application.

### DETAILED DESCRIPTION

In order for those skilled in the art to better understand the subject matter of this application, embodiments of this application will be described below in a clear and thorough manner with reference of the accompanying drawings. Apparently, the embodiments described herein are only some, but not all, embodiments of the application.

It is to be noted that the terms "first," "second," and the like in the description, claims and drawings of this application are used for distinguishing similar elements and not necessarily for describing a particular sequential or chronological order. It is to be understood that the terms so used are interchangeable under appropriate circumstances such that the embodiments of this application described herein are capable of operation in sequences other than those illustrated or otherwise described herein. Furthermore, the terms "include", "comprise" and "have" and any variations thereof, are intended to cover a non-exclusive inclusion, such that a process, method, system, article or device that comprises a list of elements or steps is not necessarily limited to those listed elements, but may include other elements or steps not expressly listed or inherent to such process, method, system, article or device.

First of all, some phrases and terms that may appear in the description of embodiments of this application are explained as follows:
"Facial recognition" is a biometric recognition technique for identifying a person based on his/her facial features. Currently, deep learning algorithms can be used to determine the identity of a target object based on massive human face image data.
"Facial misrecognition" refers to failure of a face recognition technique to accurately recognize a human face, which leads to a mismatch. For example, if 10 out of 1,000 face image recognition attempts give wrong answers, then a misrecognition rate can be defined as 1%.
"Facial recognition management" refers to management of coverage, pass rate and security of a facial recognition product. Facial recognition management essentially consists of (i) constraints of the facial recognition product, relating mainly to the coverage thereof, (ii) an interaction mechanism of the facial recognition product, relating mainly to the pass rate and user experience thereof, (iii) a face comparison mechanism of the facial recognition product, relating mainly to the pass rate thereof, and (iv) processing based on the comparison results of the facial recognition product, relating mainly to the pass rate and security thereof.
A "misrecognizable person" refers to a person with high similarity to another person in terms of face image, ID card number and name. Misrecognizable persons include highly misrecognizable persons. For example, if persons A and B are both 95% similar to a face image of the person A pre-stored in a facial recognition product, then they can be identified as highly misrecognizable persons. Highly misrecognizable persons mainly include twins and other multiple births.

### Embodiment 1

In an embodiment of this application, an object verification method is provided. It is to be noted that the steps shown in the flowcharts in the accompanying drawings may be performed, for example, by executing sets of computer-executable instructions in computer systems. Additionally, while logical orders are shown in the flowcharts, in some circumstances, the steps can also be performed in other orders than as shown or described herein.

In addition, the object verification method provided in this application enables facial recognition with a reduced misrecognition rate, in particular for persons with similar facial features, such as twin brothers or sisters, or parents and their children.

It is to be also noted that the object verification method provided in this application can be widely used in applications such as payment and office attendance monitoring. The object verification method provided in this application will be briefed below with its use in a payment application as an example. Assuming a user A desiring to purchase a product clicks a payment button displayed on his/her mobile phone, he/she will navigate to a payment interface. Accordingly, the mobile phone will activate a camera to capture a face image of the user A and based thereon to determine whether the user A is a misrecognizable person. If it is determined that the user A is not a misrecognizable person, then a traditional facial recognition method in the art is used to recognize the face of the user A for settling the payment. If it is determined that the user A is a misrecognizable person, then it is further determined whether he/she is a highly misrecognizable person. If the user A is determined as a highly misrecognizable person, then the user A is notified that he/she is not allowed to settle the payment by facial recognition and must enter a password for this purpose. If the user A is determined as a misrecognizable person but not a highly misrecognizable person, a first comparison result is obtained by comparing his/her image information with an image pre-stored in a payment software application, and a second comparison result is then obtained by comparing his/her image information with an image of a user B pre-stored in the payment software application. Subsequently, the first and second comparison results serve as a basis for determining whether the user A is allowed to settle the payment by facial recognition.

The above-described multiple comparisons performed in the object verification method provided in this application can result in not only a reduced facial misrecognition rate but also increased information security.

The object verification method provided in this application can operate in a device capable of capturing images, such as a mobile terminal, a computer terminal or the like. The mobile terminal may be, but is not limited to, a mobile phone, a tablet or the like.

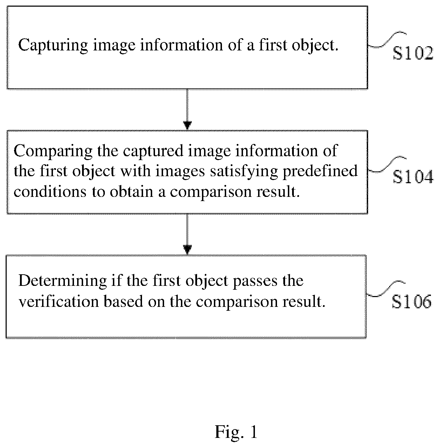

Specifically, Fig. 1 is a flowchart of the object verification method for use in the above operating environment according to an embodiment of this application. As shown in Fig. 1, the object verification method may include the steps described below.

Step S102, capturing image information of a first object.

In step S102, the image information of the first object is captured by a device capable of capturing images. The device may be, but is not limited to, a computer terminal, a mobile terminal or the like. The device may obtain a pre-stored image of the first object from a cloud server. In addition, the image information of the first object includes at least facial image information of the first object, such as relative positions of the facial features, a facial shape, etc. The first object may have one or more similar features to another object. For example, for users A and B who are twins, the user A can be regarded as the first object.

Optionally, the first object may be a user desiring to settle a payment by facial recognition. When the user navigates to a payment interface after placing an order on a shopping software application or after directly activating a payment software application (e.g., WeChat, or a banking software application), a camera in his/her mobile terminal is turned on and captures image information of the user, and the captured image is displayed on a screen of the mobile terminal. The mobile terminal then detects whether the captured image includes the user's face and whether it is valid. If the mobile terminal determines that the image does not include the user's face, it prompts the user for recapturing the image information thereof. If the mobile terminal determines that the image includes the user's face but it is invalid (e.g., only one ear of the user appears in the image), it prompts the user for recapturing image information thereof.

Step S104, comparing the captured image information of the first object with images satisfying predefined conditions to obtain a comparison result. The images satisfying predefined conditions include a pre-stored image of the first object and a pre-stored image of a second object having similar features to the first object.

It is to be noted that the mobile terminal may obtain the pre-stored images of the first and second objects from the cloud server. The predefined conditions may include at least one of: a condition indicating that a degree of similarity of the image information of the first object to a pre-stored image is higher than a first predetermined degree of similarity; a condition indicating that a degree of similarity of profile information of the first object to pre-stored information is higher than a second predetermined degree of similarity; and a condition indicating that a degree of correlation of profile information of the first object with the pre-stored information is higher than a third degree of similarity.

In an optional example, the mobile terminal obtains image information of the first object and then transmits the captured image information of the first object to the cloud server. The cloud server compares the image information of the first object with a plurality of pre-stored images and determines degrees of similarity thereto, and then selects and sends any of the pre-stored images whose degree of similarity is higher than the first predetermined degree of similarity to the mobile terminal.

In another optional example, the mobile terminal obtains image information of the first object and then transmits the captured image information of the first object to the cloud server. The cloud server determines profile information of the first object (e.g., the name, ID card number) based on the image information and compares the profile information of the first object with pieces of pre-stored profile information. Degrees of profile similarity are determined from the comparisons and any of the pieces of pre-stored profile information whose degree of profile similarity is higher than the second predetermined degree of similarity is selected. Subsequently, a pre-stored image is obtained based on the selected pre-stored profile information and transmitted to the mobile terminal. It is to be noted that, since twins or other multiple births tend to be similar in terms of name or ID card number, this approach can effectively identify the pre-stored image of the second object having such a relationship with the first object that they are twins or two of the multiple births.

In still another optional example, the mobile terminal obtains image information of the first object and then transmits the captured image information of the first object to the cloud server. The cloud server determines profile information of the first object (e.g., name, ID document number, household registration information) based on the image information thereof and compares the profile information of the first object with pieces of pre-stored profile information. Degrees of profile correlation are determined from the comparisons and any of the pieces of pre-stored profile information whose degree of profile correlation is higher than the third predetermined degree of similarity is selected. Subsequently, a pre-stored image is obtained based on the selected pre-stored profile information and transmitted to the mobile terminal. It is to be noted that since parents and their child(ren) tend to be correlated in terms of name, ID card number and household registration information, this approach can effectively identify the pre-stored image of the second object being so correlated to the first object.

Further, it is to be also noted that the foregoing three approaches can be arbitrarily combined with one another or with other possible approaches not mentioned herein, and a detailed description thereof will be omitted herein.

Step S106, determining if the first object passes the verification based on the comparison result.

In an optional example, the mobile terminal may obtain, from the comparisons, a first similarity value representing similarity between the image information of the first object and the pre-stored image of the first object and a second similarity value representing similarity between the image information of the first object and the pre-stored image of the second object, and determines if the first object passes the verification based on the first and second similarity values. Optionally, if the first similarity value is greater than the second similarity value, it is determined that the first object passes the verification and, accordingly, the first object is allowed to settle the payment. If the first similarity value is smaller than or equal to the second similarity value, it is determined that the first object fails the verification. In this case, the mobile terminal may notify the user of the failure and of the possibility to settle the payment by entering a password.

Based on Steps S102 to S106, after the image information of the first object is captured, a comparison result is obtained by comparing the captured image information of the first object with the images satisfying predefined conditions, and it is then determined whether the first object passes the verification based on the comparison result. The images satisfying predefined conditions include pre-stored images of the first and second objects having similar features.

It will be readily recognized that this application aims to distinguish the object to be verified from other object(s) with similar features. In this process, the image information of the object to be verified is also compared with its own pre-stored image. Since the similarity of the image information of the object to be verified to the pre-stored image of its own is higher than to that of any other object, the method proposed in this application can effectively distinguish objects with similar features, thus achieving a reduced facial misrecognition rate and higher information security.

Therefore, the above embodiments of this application solve the low-accuracy problem in the conventional facial recognition techniques.

It is to be noted that obtaining, by the mobile terminal, the comparison result by comparing the captured image information of the first object with the images satisfying predefined conditions may include the steps of:
Step S 1040, calculating similarity between the captured image information of the first object and the pre-stored image of the first object to obtain a first similarity value; and
Step S 1042, calculating similarity between the captured image information of the first object and the pre-stored image of the first object to obtain a second similarity value.

It is to be noted that the first similarity value represents self-similarity of the first object, while the second similarity value represents similarity between the first object and the second object.

In an optional example, after the image information of the first object is captured, the mobile terminal may transmit terminal information to the cloud server. The cloud server obtains, based on this terminal information, the pre-stored image of the first object and pre-stored image of the second object having similar features to the first object. There may be multiple such second objects. The cloud server then sends the pre-stored images of the first and second objects to the mobile terminal. The mobile terminal calculates the first and second similarity values after receiving the pre-stored images of the first and second objects.

Further, after obtaining the first and second similarity values, the mobile terminal determines whether the first object passes the verification based on the comparison result. Specifically, the mobile terminal may compare the first similarity value with the second similarity value. If the first similarity value is greater than or equal to the second similarity value, it is determined that the first object passes the verification. If the first similarity value is smaller than the second similarity value, the first object is deemed to fail the verification. Optionally, if the first object passes the verification, the first object is allowed to settle the payment via the mobile terminal. If the first object fails the verification, the mobile terminal may notify the first object of the failure and of the possibility to make another attempt. If the verification fails for three consecutive times, the mobile terminal may notify the first object of the failure and of the possibility to settle the payment by entering a password. If the first object fails to enter a correct password for three consecutive times, then the mobile terminal may lock the payment function.

In an optional example, in case of the pre-stored image of the first object including a plurality of first sub-images captured at different times, the first similarity value may be obtained by calculating similarity between the captured image information of the first object and the pre-stored image of the first object in any of the following ways:
1. calculating similarity between the image information of the first object and each of the first sub-images to obtain a plurality of first sub-similarity values and calculating an average value of the plurality of first sub-similarity values as the first similarity value;
2. calculating similarity between the image information of the first object and each of the first sub-images to obtain a plurality of first sub-similarity values and selecting a maximum value of the plurality of first sub-similarity values as the first similarity value;
3. calculating similarity between the image information of the first object and each of the first sub-images to obtain a plurality of first sub-similarity values and calculating a maximum variance of the plurality of first sub-similarity values as the first similarity value;
4. calculating similarity between the image information of the first object and each of the first sub-images to obtain a plurality of first sub-similarity values and selecting a minimum value of the plurality of first sub-similarity values as the first similarity value; and
5. calculating similarity between the image information of the first object and each of the first sub-images to obtain a plurality of first sub-similarity values and calculating a minimum variance of the plurality of first sub-similarity values as the first similarity value.

Optionally, the plurality of first sub-images of the first object may be captured at different times, such as an ID photo of the first object taken when the first object was 18 years old, a passport photo of the first object taken when the first object was 20 years old, etc. When obtaining the first sub-images captured at different times, the mobile terminal may store them locally or upload them to the cloud server. As such, when the first object activates the payment function or runs the payment software application on the mobile terminal at a later time, the mobile terminal may capture image information of the first object in real time, obtain the first sub-similarity values by comparing the captured image information with the first sub-images and take the average value, maximum value, the maximum variance, the minimum value or the minimum variance of the plurality of first sub-similarity values as the first similarity value.

Similarly, in case of the pre-stored image of the second object including a plurality of second sub-images captured at different times, the second similarity value may be obtained by calculating similarity between the captured image information of the first object and the pre-stored image of the second object in any of the following ways:
1. calculating similarity between the image information of the first object and each of the second sub-images to obtain a plurality of second sub-similarity values and calculating an average value of the plurality of second sub-similarity values as the second similarity value;
2. calculating similarity between the image information of the first object and each of the second sub-images to obtain a plurality of second sub-similarity values and selecting a maximum value of the plurality of second sub-similarity values as the second similarity value;
3. calculating similarity between the image information of the first object and each of the second sub-images to obtain a plurality of second sub-similarity values and calculating a maximum variance of the plurality of second sub-similarity values as the second similarity value;
4. calculating similarity between the image information of the first object and each of the second sub-images to obtain a plurality of second sub-similarity values and selecting a minimum value of the plurality of second sub-similarity values as the second similarity value; and
5. calculating similarity between the image information of the first object and each of the second sub-images to obtain a plurality of second sub-similarity values and calculating a minimum variance of the plurality of second sub-similarity values as the second similarity value.

It is to be noted that obtaining the second similarity value according to the image information of the first object and the pre-stored image of the second object is similar to obtaining the first similarity value according to the image information of the first object and the pre-stored image of the first object, and a further detailed description thereof is omitted herein.

Further, it is to be also noted that verifying any first object by inquiring whether there is any other object with similar features will increase the computing burden of the mobile terminal or the cloud server. In order to avoid this, it may be determined whether the first object is a misrecognizable object before the image information is captured. Determining whether the first object is a misrecognizable object may include:
Step S202, receiving a verification request for verifying identity of the first object;
Step S204, determining whether the first object for which the verification request is being made is a misrecognizable object whose identification result deviates from a correct result;
Step S206, if the first object is a misrecognizable object, triggering the steps of capturing image information of the first object and comparing the captured image information with images satisfying predefined conditions; and
Step S208, if the first object is not a misrecognizable object, triggering the steps of capturing image information of the first object and comparing the captured image information with the pre-stored image of the first object to determine whether the first object passes the verification.

In an optional example, when a first object desiring to purchase a product via a shopping software application clicks on a payment button, the shopping software application may send a verification request to a payment software application running on the mobile terminal. The verification request may contain personal information of the first object (i.e., name, ID card number and other information). Upon receipt of the verification request, the payment software application may determine whether the first object is a misrecognizable object based on the personal information contained therein. For example, based on the name and ID card number of the first object, it may determine if the first object has any twin brother or sister. If it is true, the first object may be identified as a misrecognizable object. Otherwise, the first object will not be regarded as a misrecognizable object.

Further, if the first object is a misrecognizable object, the mobile terminal may obtain a pre-stored image of any second object having similar features to the first object and determine whether the first object passes the verification based on comparison results of the captured image information of the first object with pre-stored images of the first and second objects. If the first object is not a misrecognizable object, the mobile terminal may directly obtain a pre-stored image of the first object and compare it with captured image information thereof. A degree of similarity obtained from the comparison may be then compared with a similarity threshold. If the determined degree of similarity is greater than the similarity threshold, it is determined that the first object succeeds in the verification. Otherwise, it is determined that the first object fails the verification.

In an optional example, in case of the first object being identified as a misrecognizable object, before image information of the first object is captured, it may be further determined whether to trigger the step of comparing captured image information of the first object with images satisfying predefined conditions. The determination may include:
Step S2060, determining whether a level of misrecognizability associated with the first object exceeds a threshold;
Step S2062, if the level of misrecognizability is lower than the threshold, suspending the verification request; and
Step S2064, if the level of misrecognizability exceeds the threshold, issuing a plurality of capture instructions instructing the first object to perform a plurality of actions.

It is to be noted that the aforesaid level of misrecognizability associated with the first object refers to a degree of similarity between the first and second objects with similar features. The higher the degree of similarity between the first and second objects with similar features is, the lower the level of misrecognizability may be. Specifically, if the level of misrecognizability is lower than the threshold, it is indicated that the first and second objects are highly similar to, and indistinguishable from, each other. In this case, the verification request may be suspended. For example, if the first and second objects are twins who look very similar and are indistinguishable, the mobile terminal may provide the first object with a notice indicating that the payment can be settled by entering a password. If the level of misrecognizability exceeds the threshold, it is indicated that there is still some possibility for distinguishing the first and second objects from each other. In this case, capture instructions in forms of text, voices, or videos may be issued for capturing images of the first object at different angles.

Further, it is to be also noted that a plurality of first image information of the first object is captured based on a plurality of, and a plurality of comparison results is obtained by comparing each piece of first image information with the images satisfying predefined conditions. If the number of identical ones of the comparison results exceeds a predetermined threshold, it is determined that the first object passes the verification.

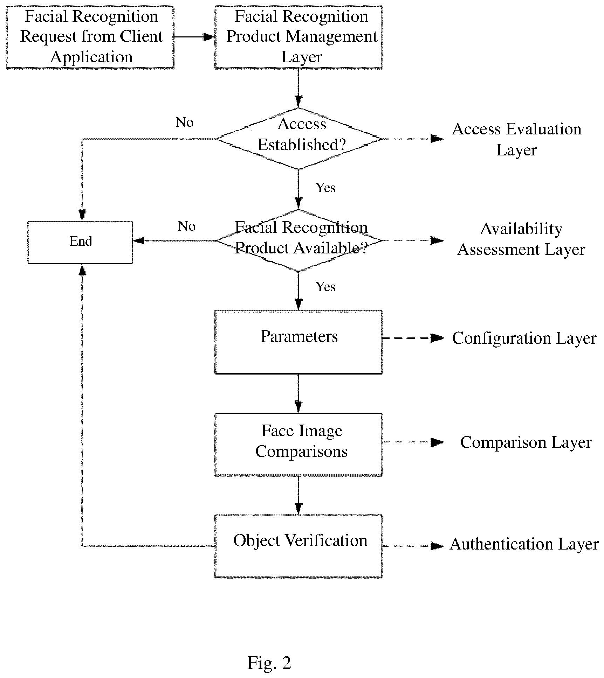

Additionally, Fig. 2 shows a flowchart of operations of a facial recognition product based on the object verification method. The facial recognition product may be, but is not limited to, a facial recognition software application. As can be seen from Fig. 2, the facial recognition product consists essentially of the following five layers of: Access Evaluation; Availability Assessment; Configuration; Comparison; and Authentication. When a facial recognition is requested from a client application (e.g., a payment client application on a mobile terminal), a management layer of the facial recognition product is activated to navigate to the aforementioned five layers. The Access Evaluation layer is configured to check the establishment of an access. For example, it may determine whether an access is to be established. The Availability Assessment layer is configured to check compatibility of the facial recognition product with a device. For example, it may determine whether the facial recognition product can be used in an Android OS. The Configuration layer is configured to provide parameters of the facial recognition product. The Comparison layer is configured to perform face image comparisons. The Authentication layer is configured to determine how an object being verified by facial recognition is verified as authentic.

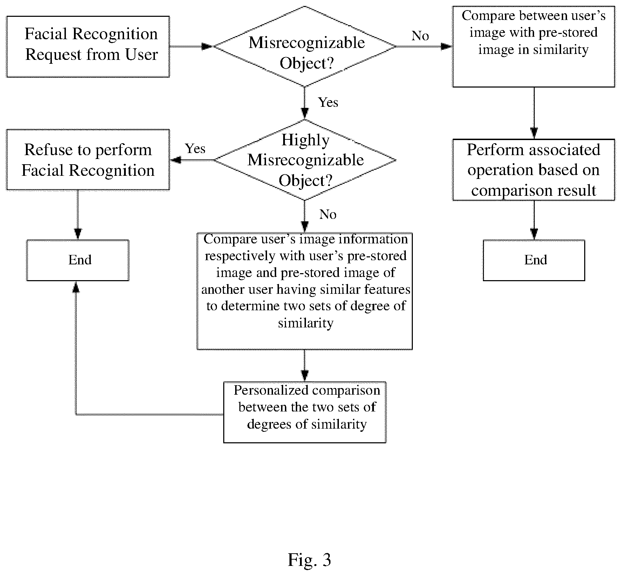

It is to be noted that this application aims mainly for improvements in the Comparison and Authentication layers. Fig. 3 shows a flowchart of an object verification method according to a preferred embodiment. Specifically, when a user wants to settle a payment for a purchase, the user may raise a facial recognition request containing personal information of the user by a mobile terminal. The mobile terminal may determine whether the user is a misrecognizable object based on the personal information in the facial recognition request. In case of the user being not determined as a misrecognizable object, the mobile terminal may compare an image of the user and a pre-stored image and determine a degree of similarity therebetween. If the degree of similarity is greater than a threshold, then an associated operation (e.g., settlement of the payment) is performed. Otherwise, such an operation is not triggered. In case of the user being determined as a misrecognizable object, the mobile terminal may further determine whether the user is a highly misrecognizable object. If it is determined that the user is a highly misrecognizable object, then the mobile terminal may refuse the user to settle the payment through facial recognition and inform the user of the failure in payment as well as of the possibility of settling the payment by entering a password. If it is determined that the user is not a highly misrecognizable object, the mobile terminal may compare image information of the user respectively with a pre-stored image of the user (e.g., photo on the ID card) and a pre-stored image of any other user with similar features, and two sets of degree of similarity may be determined from the respective comparisons. A personalized comparison (based on, for example, but is not limited to, an average value, a maximum value, a minimum value, a maximum variance, a minimum variance, etc.) may be then drawn to determine whether the payment is allowed.

As can be seen from the foregoing description, the object verification method provided in this application includes performing multiple comparisons, which allows a reduced facial misrecognition rate, resulting in improved information security.

It is to be noted that, although each of the foregoing method embodiments has been described as a combination of actions carried out in a certain sequence for the sake of ease of description, those skilled in the art will appreciate that this application is not limited to the described sequences because, according to this application, some steps can be performed in a different order or in parallel. Further, those skilled in the art will also appreciate that the embodiments described herein are preferred embodiments, and actions and modules involved therein are not necessarily required for the present application.

From the description of the above embodiments, it is apparent to those skilled in the art that the object verification method according to the above embodiments may be implemented by a combination of software and an essential generic hardware platform. Of course, it may also be implemented by hardware, but in most case, the former is more preferred. With this in mind, the subject matter of this application is per se, or the part thereof advantageous over the prior art, may be embodied as a software product. The software product may be stored in a storage medium (e.g., a ROM/RAM, magnetic disk or CD-ROM) and contain a number of instructions for causing a terminal device (which may be a mobile phone, a computer, a server or a network appliance) to carry out the method according to embodiments of this application.

### Embodiment 2

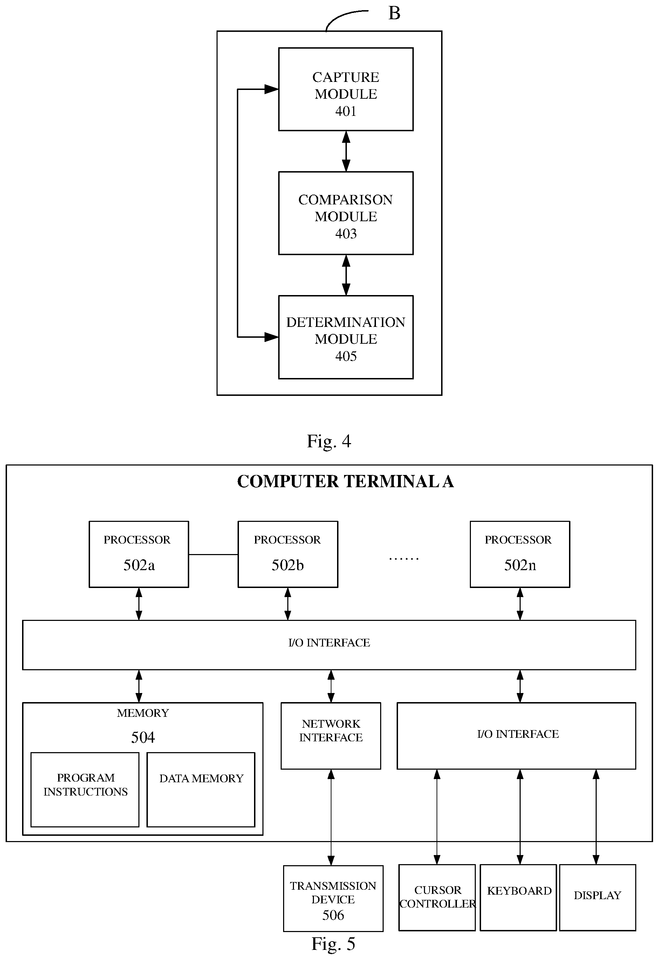

In an embodiment of this application, a device for carrying out the object verification method as defined above is further provided. As shown in Fig. 4, the device B includes a capture module 401, a comparison module 403 and a determination module 405.

The capture module 401 is configured to capture image information of a first object. The comparison module 403 is configured to compare the captured image information of the first object with images satisfying predefined conditions to obtain a comparison result. The images satisfying predefined conditions include a pre-stored image of the first object and a pre-stored image of a second object having similar features to the first object. The determination module 405 is configured to determine whether the first object passes the verification based on the comparison result.

Here, it is to be noted that the capture module 401, the comparison module 403 and the determination module 405 correspond to respective steps S102 to S106 in Embodiment 1 in terms of, but not limited to, application examples and scenarios. It is to be noted that each of these modules can operate, as part of the device, in the mobile terminal of Embodiment 1.

In an optional example, the comparison module may include a first processing module and a second processing module. Additionally, the first processing module is configured to calculate similarity between the captured image information of the first object and the pre-stored image of the first object to obtain a first similarity value, and the second processing module is configured to calculate similarity between the captured image information of the first object and the pre-stored image of the second object to obtain a second similarity value. The first similarity value represents self-similarity of the first object, and the second similarity value represents similarity of the first object to the second object.

Here, it is to be noted that the first and second processing modules correspond to respective steps S1040 to S1042 in Embodiment 1 in terms of, but not limited to, application examples and scenarios. It is to be noted that each of these modules can operate, as part of the device, in the mobile terminal of Embodiment 1.

In an optional example, the determination module may include a first comparison module, a third processing module and a fourth processing module. The first comparison module is configured to compare the first similarity value with the second similarity value. The third processing module is configured to, if the first similarity value is greater than or equal to the second similarity value, determine that the first object passes the verification. The fourth processing module is configured to, if the first similarity value is smaller than the second similarity value, determine that the first object fails the verification.

In an optional example, in the event of the pre-stored image of the first object comprising a plurality of first sub-images captured at different times, obtaining the first similarity value by calculating similarity between the captured image information of the first object and the pre-stored image of the first object may include: calculating similarity between the image information of the first object and each of the first sub-images to obtain a plurality of first sub-similarity values and calculating an average value of the plurality of first sub-similarity values as the first similarity value; or calculating similarity between the image information of the first object and each of the first sub-images to obtain a plurality of first sub-similarity values and selecting a maximum value of the plurality of first sub-similarity values as the first similarity value; or calculating similarity between the image information of the first object and each of the first sub-images to obtain a plurality of first sub-similarity values and calculating a maximum variance of the plurality first sub-similarity values as the first similarity value; or calculating similarity between the image information of the first object and each of the first sub-images to obtain a plurality of first sub-similarity values and selecting a minimum value of the plurality of first sub-similarity values as the first similarity value; or calculating similarity between the image information of the first object and each of the first sub-images to obtain a plurality of first sub-similarity values and calculating a minimum variance of the plurality first sub-similarity values as the first similarity value.

In an optional example, in the event of the pre-stored image of the second object comprising a plurality of second sub-images captured at different times, obtaining the second similarity value by calculating similarity between the captured image information of the first object and the pre-stored image of the second object may include: calculating similarity between the image information of the first object and each of the second sub-images to obtain a plurality of second sub-similarity values and calculating an average value of the plurality of second sub-similarity values as the second similarity value; or calculating similarity between the image information of the first object and each of the second sub-images to obtain a plurality of second sub-similarity values and selecting a maximum value of the plurality of second sub-similarity values as the second similarity value; or calculating similarity between the image information of the first object and each of the second sub-images to obtain a plurality of second sub-similarity values and calculating a maximum variance of the plurality of second sub-similarity values as the second similarity value; or calculating similarity between the image information of the first object and each of the second sub-images to obtain a plurality of second sub-similarity values and selecting a minimum value of the plurality of second sub-similarity values as the second similarity value; or calculating similarity between the image information of the first object and each of the second sub-images to obtain plurality of second sub-similarity values and calculating a minimum variance of the plurality of second sub-similarity values as the second similarity value.

In an optional example, the object verification device may further include a reception module, a first determination module, a first trigger module and a second trigger module. The reception module is configured to receive a verification request for verifying identity of the first object. The first determination module is configured to determine whether the first object for which the verification request is being made is a misrecognizable object whose identification result deviates from a correct result. The first trigger module is configured to, if the first object is a misrecognizable object, trigger the steps of capturing image information of the first object and comparing the captured image information with images satisfying predefined conditions. The second trigger module is configured to, if the first object is not a misrecognizable object, trigger the steps of capturing image information of the first object and determining whether the first object passes the verification by comparing the captured image information with the pre-stored image of the first object.

Here, it is to be noted that the reception module, the first determination module, the first trigger module and the second trigger module correspond to respective steps S202 to S208 in Embodiment 1 in terms of, but not limited to, application examples and scenarios. It is to be noted that each of these modules can operate, as part of the device, in the mobile terminal of Embodiment 1.

In an optional example, the object verification device may further include a second determination module, a fifth processing module and a sixth processing module. The second determination module is configured to determine whether a level of misrecognizability associated with the first object exceeds a threshold. The fifth processing module is configured to, if the level of misrecognizability exceeds the threshold, suspend the verification request. The sixth processing module is configured to, if the level of misrecognizability is lower than the threshold, issue plurality of capture instructions instructing the first object to perform a plurality of actions.

Here, it is to be noted that the second determination module, the fifth processing module and the sixth processing module correspond to respective steps S2060 to S2064 in Embodiment 1 in terms of, but not limited to, application examples and scenarios. It is to be noted that each of these modules can operate, as part of the device, in the mobile terminal of Embodiment 1.

In an optional example, the plurality of capture instructions may trigger the capture of a plurality of pieces of first image information of the first object, and a plurality of comparison results may be obtained by comparing each of the pieces of first image information with the images satisfying predefined conditions. If the number of identical ones of the plurality of comparison results exceeds a predetermined threshold, it may be determined that the first object passes the verification.

### Embodiment 3

In an embodiment of this application, an object verification system is further provided. The object verification system is able to carry out the object verification method of Embodiment 1. Specifically, the system includes a processor and a memory connected to the processor. The memory is configured to provide the processor with instructions for carrying out the steps of: capturing image information of a first object; comparing the captured image information of the first object with images satisfying predefined conditions to obtain a comparison result, wherein the images satisfying predefined conditions include a pre-stored image of the first object and a pre-stored image of a second object having similar features to the first object; and determining whether the first object passes the verification based on the comparison result.

As can be seen from the above description, after an image of the first object is captured, the captured image information of the first object is compared with the images satisfying predefined conditions, and it is then determined whether the first object passes the verification based on the comparison result. The images satisfying predefined conditions include pre-stored images of the first and second objects with similar features.

It will be readily recognized that this application aims to distinguish the object to be verified from other object(s) with similar features. In this process, the image information of the object to be verified is also compared with its own pre-stored image. Since the similarity of the image information of the object to be verified to the pre-stored image of its own is higher than to that of any other object, the method proposed in this application can effectively distinguish between objects with similar features, thus achieving a reduced facial misrecognition rate and higher information security.

Therefore, the above embodiments of this application solve the low-accuracy problem in the conventional facial recognition techniques.

In an optional example, the processor may be configured to: calculate similarity between the captured image information of the first object and the pre-stored image of the first object to obtain a first similarity value; calculate similarity between the captured image information of the first object and the pre-stored image of the second object to obtain a second similarity value; compare the first similarity value with the second similarity value; if the first similarity value is greater than or equal to the second similarity value, determine that the first object passes the verification; and if the first similarity value is smaller than the second similarity value, determine that the first object fails the verification. The first similarity value represents self-similarity of the first object, while the second similarity value represents similarity of the first object to the second object.

Optionally, in the event of the pre-stored image of the first object comprising a plurality of first sub-images captured at different times, the first similarity value may be obtained by calculating similarity between the captured image information of the first object and the pre-stored image of the first object in any of the following manners: calculating similarity between the image information of the first object and each of the first sub-images to obtain a plurality of first sub-similarity values and calculating an average value of the plurality of first sub-similarity values as the first similarity value; or calculating similarity between the image information of the first object and each of the first sub-images to obtain a plurality of first sub-similarity values and selecting a maximum value of the plurality of first sub-similarity values as the first similarity value; or calculating similarity between the image information of the first object and each of the first sub-images to obtain a plurality of first sub-similarity values and calculating a maximum variance of the plurality of first sub-similarity values as the first similarity value; or calculating similarity between the image information of the first object and each of the first sub-images to obtain a plurality of first sub-similarity values and selecting a minimum value of the plurality of first sub-similarity values as the first similarity value; or calculating similarity between the image information of the first object and each of the first sub-images to obtain a plurality of first sub-similarity values and calculating a minimum variance of the plurality of first sub-similarity values as the first similarity value.

Optionally, in the event of the pre-stored image of the second object comprising a plurality of second sub-images captured at different times, the second similarity value may be obtained by calculating similarity between the captured image information of the first object and the pre-stored image of the second object in any of the following manners: calculating similarity between the image information of the first object and each of the second sub-images to obtain a plurality of second sub-similarity values and calculating an average value of the plurality of second sub-similarity values as the second similarity value; or calculating similarity between the image information of the first object and each of the second sub-images to obtain a plurality of second sub-similarity values and selecting a maximum value of the plurality of second sub-similarity values as the second similarity value; or calculating similarity between the image information of the first object and each of the second sub-images to obtain a plurality of second sub-similarity values and calculating a maximum variance of the plurality of second sub-similarity values as the second similarity value; or calculating similarity between the image information of the first object and each of the second sub-images to obtain a plurality of second sub-similarity values and selecting a minimum value of the plurality of second sub-similarity values as the second similarity value; or calculating similarity between the image information of the first object and each of the second sub-images to obtain a plurality of second sub-similarity values and calculating a minimum variance of the plurality of second sub-similarity values as the second similarity value.

In an optional example, prior to capturing the image information of the first object, the processor may be configured to: receive a verification request; determine whether the first object for which the verification request is being made is a misrecognizable object, and if the first object is a misrecognizable object; trigger the steps of capturing image information of the first object and comparing the captured image information with images satisfying predefined conditions; and if the first object is not a misrecognizable object, triggering the steps of capturing image information of the first object and determining whether the first object passes the verification by comparing the captured image information with the pre-stored image of the first object. It is to be noted that the verification request is for verifying identity of the first object and that the misrecognizable object is an object whose identification result deviates from a correct result.

In an optional example, in the event of the first object being a misrecognizable object, prior to capturing the image information of the first object, the processor may be configured to: determine whether a level of misrecognizability associated with the first object exceeds a threshold; if the level of misrecognizability exceeds the threshold, suspend the verification request; and if the level of misrecognizability is lower than the threshold, issue plurality of capture instructions instructing the first object to perform a plurality of actions.

It is to be noted that the processor may be so configured that the plurality of capture instructions triggers the capture of a plurality of pieces of first image information of the first object and that a plurality of comparison results are obtained by comparing each of the pieces of first image information with the images satisfying predefined conditions. In addition, if the number of identical ones of the plurality of comparison results exceeds a predetermined threshold, it may be determined that the first object passes the verification.

### Embodiment 4

In an embodiment of this application, a mobile device is further provided. The mobile device may be implemented as any computer terminal in a computer terminal group. Optionally, in this embodiment, the computer terminal may be replaced with any other suitable terminal device such as a mobile terminal.

Optionally, in this embodiment, the computer terminal may be deployed in at least one of a plurality of network devices in a computer network.

Fig. 5 is a block diagram showing the hardware architecture of the computer terminal. As shown in Fig. 5, the computer terminal A may include one or more processors 502 (shown as 502a, 502b ... 502n) (each processor 502 may include, but is not limited to, a processing component such as a microprocessor (e.g., a MCU) or a programmable logic device (e.g., FPGA)), a memory 504 for storing data and a transmission device 506 for communications. Additionally, it may also include a display, an input/output (I/O) interface, a universal serial bus (USB) port (may be included as one port of the I/O interface); a network interface; a power supply; and/or a camera. A person of ordinary skill in the art will appreciate that the architecture shown in Fig. 5 is merely illustrative and does not limit the structure of the electronic device in any sense. For example, the computer terminal A may have more or fewer components than those shown in Fig. 5, or may have a different configuration from that shown in Fig. 5.

It should be noted that the one or more processors 502 and/or other data processing circuitry may be generally referred to herein as "data processing circuitry". This data processing circuitry may be embodied wholly or in part as software, firmware, hardware, or any combination thereof. Additionally, the data processing circuitry may be embodied as a separate processing module or may be integrated wholly or in part into any other component of the computer terminal A. As taught in embodiments of this application, the data processing circuitry serves as a processor controlling (e.g., selection of a variable resistance terminal path connected to an interface).

The processor 502 may call, via the transmission device, information and an application program stored in the memory for carrying out the steps of: capturing image information of a first object; comparing the captured image information of the first object with images satisfying predefined conditions to obtain a comparison result, wherein the images satisfying predefined conditions include a pre-stored image of the first object and a pre-stored image of a second object having similar features to the first object; and determining whether the first object passes the verification based on the comparison result.

The memory 504 may be used to store programs and modules for application software, such as instructions/data of programs corresponding to an object verification method consistent with an embodiment of this application. The processor 502 performs various functions and processes various data (i.e., implementing the object verification method as defined above) by running the software programs and modules stored in the memory 504. The memory 504 may include high-speed random access memory, and may include non-volatile memory such as one or more magnetic disk memory devices, flash memories or other non-volatile solid state memory devices. In some instances, the memory 504 may further include memory devices remotely located from the processor 502, which may be connected to the computer terminal A via a network. Examples of the network include, but are not limited to, the Internet, an enterprise intranet, a local area network, a mobile communication network and combinations thereof.

The transmission device 506 is configured to receive or transmit data via a network. Particular examples of the network may include a wireless network provided by a communication service provider of the computer terminal A. In one example, the transmission device 506 includes a network interface controller (NIC), which can be connected to other network devices via a base station and is thus capable of communicating with the Internet. In one example, the transmission device 506 may be a radio frequency (RF) module configured to communicate with the Internet in a wireless manner.

The display may be, for example, a liquid crystal display (LCD) with a touch screen, which allows a user to interact with a user interface of the computer terminal A.

Here, it is to be noted that, in some optional embodiments, the computer terminal A of Fig. 5 may include hardware elements (including circuits), software components (including computer codes stored in a computer-readable medium) or combinations thereof. It is to be noted that the example shown in Fig. 5 is only one of possible particular examples and is intended to demonstrate the types of components that can be present in the computer terminal A.

In this embodiment, the computer terminal A can execute application program codes for carrying out the steps in the object verification method: calculating similarity between the captured image information of the first object and the pre-stored image of the first object to obtain a first similarity value; and calculating similarity between the captured image information of the first object and the pre-stored image of the second object to obtain a second similarity value. The first similarity value represents self-similarity of the first object, and the second similarity value represents similarity of the first object to the second object.

In this embodiment, the computer terminal A can execute application program codes for carrying out the following steps in the object verification method: comparing the first similarity value with the second similarity value; if the first similarity value is greater than or equal to the second similarity value, determining that the first object passes the verification; and if the first similarity value is smaller than the second similarity value, determining that the first object fails the verification.

In this embodiment, the computer terminal A can execute application program codes for carrying out the following steps in the object verification method: in the event of the pre-stored image of the first object comprising a plurality of first sub-images captured at different times, the step of calculating similarity between the captured image information of the first object and the pre-stored image of the first object to obtain the first similarity value including: calculating similarity between the image information of the first object and each of the first sub-images to obtain a plurality of first sub-similarity values and calculating an average value of the plurality of first sub-similarity values as the first similarity value; or calculating similarity between the image information of the first object and each of the first sub-images to obtain a plurality of first sub-similarity values and selecting a maximum value of the plurality of first sub-similarity values as the first similarity value; or calculating similarity between the image information of the first object and each of the first sub-images to obtain a plurality of first sub-similarity values and calculating a maximum variance of the plurality of first sub-similarity values as the first similarity value; or calculating similarity between the image information of the first object and each of the first sub-images to obtain a plurality of first sub-similarity values and selecting a minimum value of the plurality of first sub-similarity values as the first similarity value; or calculating similarity between the image information of the first object and each of the first sub-images to obtain a plurality of first sub-similarity values and calculating a minimum variance of the plurality of first sub-similarity values as the first similarity value.

In this embodiment, the computer terminal A can execute application program codes for carrying out the following steps in the object verification method: in the event of the pre-stored image of the second object comprising a plurality of second sub-images captured at different times, the step of calculating similarity between the captured image information of the first object and the pre-stored image of the second object to obtain the second similarity value including: calculating similarity between the image information of the first object and each of the second sub-images to obtain a plurality of second sub-similarity values and calculating an average value of the plurality of second sub-similarity values as the second similarity value; or calculating similarity between the image information of the first object and each of the second sub-images to obtain a plurality of second sub-similarity values and selecting a maximum value of the plurality of second sub-similarity values as the second similarity value; or calculating similarity between the image information of the first object and each of the second sub-images to obtain a plurality of second sub-similarity values and calculating a maximum variance of the plurality of second sub-similarity values as the second similarity value; or calculating similarity between the image information of the first object and each of the second sub-images to obtain a plurality of second sub-similarity values and selecting a minimum value of the plurality of second sub-similarity values as the second similarity value; or calculating similarity between the image information of the first object and each of the second sub-images to obtain a plurality of second sub-similarity values and calculating a minimum variance of the plurality of second sub-similarity values as the second similarity value.

In this embodiment, the computer terminal A can execute application program codes for carrying out the following steps in the object verification method: receiving a verification request for verifying identity of the first object; determining whether the first object for which the verification request is being made is a misrecognizable object whose identification result deviates from a correct result; if the first object is a misrecognizable object, triggering the steps of capturing image information of the first object and comparing the captured image information with images satisfying predefined conditions; and if the first object is not a misrecognizable object, triggering the steps of capturing image information of the first object and determining whether the first object passes the verification by comparing the captured image information with the pre-stored image of the first object.

In this embodiment, the computer terminal A can execute application program codes for carrying out the following steps in the object verification method: determining whether a level of misrecognizability associated with the first object exceeds a threshold; if the level of misrecognizability exceeds the threshold, suspending the verification request; and if the level of misrecognizability is lower than the threshold, issuing a plurality of capture instructions instructing the first object to perform a plurality of actions.

In this embodiment, the computer terminal A can execute application program codes for carrying out the following steps in the object verification method: triggering, by the plurality of capture instructions, the capture of a plurality of pieces of first image information of the first object; and comparing each of the pieces of first image information with the images satisfying predefined conditions to obtain a plurality of comparison results. If the number of identical ones of the plurality of comparison results exceeds a predetermined threshold, it is determined that the first object passes the verification.

In this embodiment, the computer terminal A can execute application program codes for carrying out the following steps in the object verification method: capturing image information of a first object; comparing the captured image information of the first object with images satisfying predefined conditions to obtain a comparison result, wherein the images satisfying predefined conditions include a pre-stored image of the first object and a pre-stored image of a second object having similar features to the first object; and determining whether the first object passes the verification based on the comparison result.

Those of ordinary skill in the art will appreciate that the structure shown in Fig. 5 is merely illustrative, and the computer terminal may also be a smartphone (e.g., an Android phone, iOS phone, etc.), a tablet computer, a palm computer, a mobile internet device (MID), a PAD or another suitable terminal device. Fig. 5 does not limit the structure of the electronic device in any way. For example, the computer terminal A may have more or fewer components than those shown in Fig. 5 (e.g., a network interface, a display device, etc.), or may have a different configuration from that shown in Fig. 5.

Those of ordinary skill in the art will appreciate that all or some of the steps in the various methods of the foregoing embodiments may be performed by instructing related hardware in a terminal device with a program, which can be stored in a computer-readable storage medium. Examples of the storage medium may include a flash memory, a read-only memory (ROM) device, a random access device (RAM) device, a magnetic disk, an optical disk, etc.

### Embodiment 5

In an embodiment of this application, a storage medium is further provided. Optionally, in this embodiment, the storage medium may be used to store program codes for carrying out the object verification method of Embodiment 1.

Optionally, in this embodiment, the storage medium may be deployed in any computer terminal of a computer terminal group in a computer network, or in any mobile terminal of a mobile terminal group.

Optionally, in this embodiment, the storage medium may be configured to store program codes for carrying out the steps of: capturing image information of a first object; comparing the captured image information of the first object with images satisfying predefined conditions to obtain a comparison result, wherein the images satisfying predefined conditions include a pre-stored image of the first object and a pre-stored image of a second object having similar features to the first object; and determining whether the first object passes the verification based on the comparison result.

Optionally, in this embodiment, the storage medium may be configured to store program codes for carrying out the steps of: calculating similarity between the captured image information of the first object and the pre-stored image of the first object to obtain a first similarity value; and calculating similarity between the captured image information of the first object and the pre-stored image of the second object to obtain a second similarity value, wherein the first similarity value represents self-similarity of the first object, and the second similarity value represents similarity of the first object to the second object.

Optionally, in this embodiment, the storage medium may be configured to store program codes for carrying out the steps of: comparing the first similarity value with the second similarity value; if the first similarity value is greater than or equal to the second similarity value, determining that the first object passes the verification; and if the first similarity value is smaller than the second similarity value, determining that the first object fails the verification.

Optionally, in this embodiment, the storage medium may be configured to store program codes for carrying out the steps of: in the event of the pre-stored image of the first object comprising a plurality of first sub-images captured at different times, the step of calculating similarity between the captured image information of the first object and the pre-stored image of the first object to obtain the first similarity value including: calculating similarity between the image information of the first object and each of the first sub-images to obtain a plurality of first sub-similarity values and calculating an average value of the plurality of first sub-similarity values as the first similarity value; or calculating similarity between the image information of the first object and each of the first sub-images to obtain a plurality of first sub-similarity values and selecting a maximum value of the plurality of first sub-similarity values as the first similarity value; or calculating similarity between the image information of the first object and each of the first sub-images to obtain a plurality of first sub-similarity values and calculating a maximum variance of the plurality of first sub-similarity values as the first similarity value; or calculating similarity between the image information of the first object and each of the first sub-images to obtain a plurality of first sub-similarity values and selecting a minimum value of the plurality of first sub-similarity values as the first similarity value; or calculating similarity between the image information of the first object and each of the first sub-images to obtain a plurality of first sub-similarity values and calculating a minimum variance of the plurality of first sub-similarity values as the first similarity value.

Optionally, in this embodiment, the storage medium may be configured to store program codes for carrying out the steps of: in the event of the pre-stored image of the second object comprising a plurality of second sub-images captured at different times, the step of calculating similarity between the captured image information of the first object and the pre-stored image of the second object to obtain the second similarity value including: calculating similarity between the image information of the first object and each of the second sub-images to obtain a plurality of second sub-similarity values and calculating an average value of the plurality of second sub-similarity values as the second similarity value; or calculating similarity between the image information of the first object and each of the second sub-images to obtain a plurality of second sub-similarity values and selecting a maximum value of the plurality of second sub-similarity values as the second similarity value; or calculating similarity between the image information of the first object and each of the second sub-images to obtain a plurality of second sub-similarity values and calculating a maximum variance of the plurality of second sub-similarity values as the second similarity value; or calculating similarity between the image information of the first object and each of the second sub-images to obtain a plurality of second sub-similarity values and selecting a minimum value of the plurality of second sub-similarity values as the second similarity value; or calculating similarity between the image information of the first object and each of the second sub-images to obtain a plurality of second sub-similarity values and calculating a minimum variance of the plurality of second sub-similarity values as the second similarity value.

Optionally, in this embodiment, the storage medium may be configured to store program codes for carrying out the steps of: receiving a verification request for verifying identity of the first object; determining whether the first object for which the verification request is being made is a misrecognizable object whose identification result deviates from a correct result; if the first object is a misrecognizable object, triggering the steps of capturing image information of the first object and comparing the captured image information with images satisfying predefined conditions; and if the first object is not a misrecognizable object, triggering the steps of capturing image information of the first object and determining whether the first object passes the verification by comparing the captured image information with the pre-stored image of the first object.

Optionally, in this embodiment, the storage medium may be configured to store program codes for carrying out the steps of: determining whether a level of misrecognizability associated with the first object exceeds a threshold; if the level of misrecognizability exceeds the threshold, suspending the verification request; and if the level of misrecognizability is lower than the threshold, issuing a plurality of capture instructions instructing the first object to perform a plurality of actions.

Optionally, in this embodiment, the storage medium may be configured to store program codes for carrying out the steps of: triggering, by the plurality of capture instructions, the capture of a plurality of pieces of first image information of the first object; and comparing each of the pieces of first image information with the images satisfying predefined conditions to obtain a plurality of comparison results. Additionally, if the number of identical ones of the plurality of comparison results exceeds a predetermined threshold, it is determined that the first object passes the verification.

### Embodiment 6

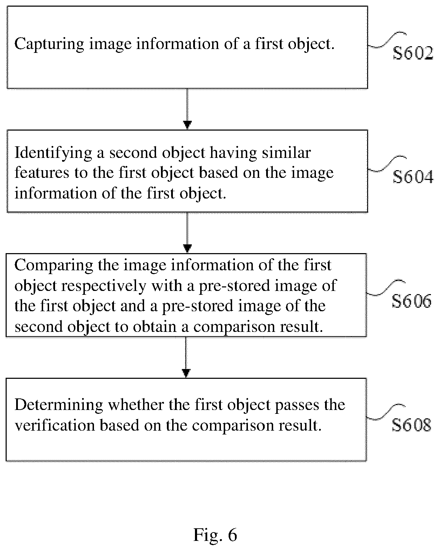

In an embodiment of this application, an object verification method is further provided. Fig. 6 shows a flowchart of this object verification method. As shown in Fig. 6, the method includes the steps of:
Step S602, capturing image information of a first object;
Step S604, identifying a second object having similar features to the first object based on the image information of the first object;
Step S606, comparing the image information of the first object respectively with a pre-stored image of the first object and a pre-stored image of the second object to obtain a comparison result; and
Step S608, determining whether the first object passes the verification based on the comparison result.

It is to be noted that the first object in steps S602 to S608 is an object in need of facial recognition, such as a user desiring to settle a payment by facial recognition.

Optionally, when the user navigates to a payment interface after placing an order on a shopping software application or after directly activating a payment software application (e.g., WeChat, or a banking software application), a camera in mobile terminal of the user is turned on and captures image information of the user (i.e, first image information), and the captured image is displayed on a screen of the mobile terminal. The mobile terminal then obtains, from a cloud server, a pre-stored image of the first object and a pre-stored image of a second object having similar features to the first object. Prior to obtaining the pre-stored image of the second object, the mobile terminal or cloud server compares the image information of the first object with image information of other objects and thus obtains comparison results, and the second object is identified based on the comparison results. The comparison results may be degrees of similarity. That is, any object with a degree of similarity greater than a predetermined degree of similarity is identified as the second object. After the second object is identified, the mobile terminal may calculate similarity between the captured image information of the first object and the pre-stored image of the first object to obtain a first similarity value, and calculate similarity between the captured image information of the first object and the pre-stored image of the second object to obtain a second similarity. After that, the first similarity value may be compared with the second similarity value. If the first similarity value is greater than or equal to the second similarity value, it may be determined that the first object passes the verification. If the first similarity value is smaller than second similarity value, it may be determined that the first object fails the verification.

It is to be noted that, in the above process, the first similarity value represents self-similarity of the first object, while the second similarity value represents similarity of the first object to the second object.

Additionally, in the event of the pre-stored image of the first object including a plurality of first sub-images captured at different times, a plurality of first sub-similarity values may be obtained by calculating similarity between the image information of the first object and each of the first sub-images, and an average value, a maximum value, a maximum variance, a minimum value or a minimum variance of the plurality of first sub-similarity values may be taken as the first similarity value. Likewise, in the event of the pre-stored image of the second object including a plurality of second sub-images captured at different times, a plurality of second sub-similarity values may be obtained by calculating similarity between the image information of the first object and each of the second sub-images, and an average value, a maximum value, a maximum variance, a minimum value or a minimum variance of the plurality of second sub-similarity values may be taken as the second similarity value.

Based on steps S602 to S608, after the image information of the first object is captured, the second object with similar features to the first object is identified based on the image information of the first object and then the image information of the first object is compared respectively with the pre-stored images of the first and second objects to obtain comparison results. Based on the obtained comparison results, it is determined whether first object passes the verification.

It will be readily recognized that this application aims to distinguish the object to be verified from other object(s) having similar features. In this process, the image information of the object to be verified is also compared with its own pre-stored image. Since the similarity of the image information of the object to be verified to the pre-stored image of its own is higher than to that of any other object, the method proposed in this application can effectively distinguish objects with similar features, thus achieving a reduced facial misrecognition rate and higher information security.

Therefore, the above embodiments of this application solve the low-accuracy problem in the conventional facial recognition techniques.

In an optional example, identifying the second object having similar features to the first object based on the image information of the first object comprises the steps of:
Step S6040, obtaining image information of a plurality of objects from a predetermined database;
Step S6042, comparing the image information of the first object with the image information of the plurality of objects to obtain degrees of similarity therebetween; and
Step S6044, identifying the second object from the plurality of objects based on the degrees of similarity and a predetermined degree of similarity.

In an optional example, after capturing the image information of the first object, the mobile terminal may transmit the captured image information of the first object to the cloud server, which then compares the image information of the first object with a plurality of pre-stored images and determines degrees of similarity thereto and sends any of the pre-stored images whose degree of similarity is higher than a first predetermined degree of similarity to the mobile terminal.

In another optional example, after capturing the image information of the first object, the mobile terminal may transmit the captured image information of the first object to the cloud server, which then determines profile information of the first object (e.g., the name, ID card number) based on the image information thereof and compares the profile information of the first object with pieces of pre-stored profile information to determine degrees of profile similarity. Any of the pieces of pre-stored profile information whose degree of profile similarity is higher than the second predetermined degree of similarity is selected. Subsequently, a pre-stored image is obtained based on the selected pre-stored profile information and sent to the mobile terminal. It is to be noted that, since twins or other multiple births tend to be similar in terms of name or ID card number, this approach can effectively identify the pre-stored image of the second object if the second object has such a relationship with the first object that they are twins or two of multiple births.

In still another optional example, after capturing the image information of the first object, the mobile terminal may transmit the captured image information of the first object to the cloud server, which then determines profile information of the first object (e.g., name, ID card number, household registration information) based on the image information thereof and compares the profile information of the first object with pieces of pre-stored profile information to determine degrees of profile correlation. Any of the pieces of pre-stored profile information whose degree of profile correlation is higher than the third predetermined degree of similarity is selected. Subsequently, a pre-stored image is obtained based on the selected pre-stored profile information and sent to the mobile terminal. It is to be noted that since parents and their child(ren) tend to be correlated in terms of name, ID card number and household registration information, this approach can effectively identify the pre-stored image of the second object if the second object is so correlated to the first object.

Further, it is to be also noted that the foregoing three approaches can be arbitrarily combined with one another or with other possible approaches not mentioned herein, and a detailed description thereof will not be omitted herein.

The numbering of the above embodiments is for the purpose of illustration only and does not imply their superiority or inferiority.

Each of the above embodiments is descried with their own emphasis. For any feature not described in detail in a certain one of the embodiments, reference can be made to the description of any other embodiment for more details therein.

It is to be understood that the subject matter disclosed in the several embodiments described herein may be practiced otherwise. The device embodiments described above are only illustrative. For example, the boundaries of the various modules are defined herein only by their logical functions, and may be also defined otherwise in practice. For example, a plurality of such modules or components may be combined or integrated in another system, or certain features may be omitted or not implemented. Further, the illustrated or discussed couplings between elements or modules include direct couplings or communicative connections accomplished by interfaces as well as indirect couplings or communicative connections accomplished electrically or otherwise.

Modules that have been described as separate components herein may be physically separated or not, and components that have been shown as modules may be physical modules or not. They may be deployed in a single location or distributed across a plurality of network devices. As actually needed, either all or some of such modules may be selected in accordance with embodiments disclosed herein.

Additionally, various functional modules included in various embodiments provided in this application may be integrated in a single processing module, or exist separately as a physical module. Alternatively, two or more of such functional modules are integrated in one module. Such an integrated module may be implemented by hardware or as a software functional module.

When implemented as a software functional block and sold or used as a separate product, the integrated module may be stored in a computer-readable storage medium. With this in mind, the subject matter of this application is per se, or the part thereof advantageous over the prior art, or part or the entirety of the subject matter, may be embodied as a software product stored in a storage medium and containing a number of instructions for causing a computing device (e.g., a personal computer, a server, a network appliance, etc.) to carry out all or some steps in methods provided in various embodiments of this application. Examples of the storage medium include various media that can store program codes, such as flash memory, read-only memory (ROM), random access memory (RAM), removable hard disk drives, magnetic disk storage devices and optical disk storage devices.

Presented above are merely a few preferred embodiments of the present application.

## Claims

1. An computer-implemented object verification method, comprising:
capturing (S102) image information of a first object;
comparing (S104) the captured image information of the first object with images satisfying predefined conditions to obtain a comparison result, wherein the images satisfying predefined conditions comprise a pre-stored image of the first object and a pre-stored image of a second object having similar features to the first object, the step of comparing comprising
calculating similarity between the captured image information of the first object and the pre-stored image of the first object to obtain a first similarity value; and
calculating similarity between the captured image information of the first object and the pre-stored image of the second object to obtain a second similarity value,
wherein the first similarity value is configured to represent self-similarity of the first object, and the second similarity value is configured to represent a similarity between the first object and the second object,
**characterised in that**:
the pre-stored image of the first object comprises a plurality of first sub-images captured at different times, and calculating similarity between the captured image information of the first object and the pre-stored image of the first object to obtain the first similarity value comprises:
calculating similarity between the image information of the first object and each of the first sub-images to obtain a plurality of first sub-similarity values and calculating an average value of the plurality of first sub-similarity values as the first similarity value;
or
calculating similarity between the image information of the first object and each of the first sub-images to obtain a plurality of first sub-similarity values and selecting a maximum value of the plurality of first sub-similarity values as the first similarity value;
or
calculating similarity between the image information of the first object and each of the first sub-images to obtain a plurality of first sub-similarity values and calculating a maximum variance of the plurality of first sub-similarity values as the first similarity value; or
calculating similarity between the image information of the first object and each of the first sub-images to obtain a plurality of first sub-similarity values and selecting a minimum value of the plurality of first sub-similarity values as the first similarity value;
or
calculating similarity between the image information of the first object and each of the first sub-images to obtain a plurality of first sub-similarity values and calculating a minimum variance of the plurality of first sub-similarity values as the first similarity value; and
determining (S106) whether the first object passes the verification based on the comparison result.

2. The method of claim 1, wherein determining whether the first object passes the verification based on the comparison result comprises:
comparing the first similarity value with the second similarity value;
determining that the first object passes the verification if the first similarity value is greater than or equal to the second similarity value; and
determining that the first object fails the verification if the first similarity value is smaller than the second similarity value.

3. The method of claim 1 or 2, wherein the pre-stored image of the second object comprises a plurality of second sub-images captured at different times, and calculating similarity between the captured image information of the first object and the pre-stored image of the second object to obtain the second similarity value comprises:
calculating similarity between the image information of the first object and each of the second sub-images to obtain a plurality of second sub-similarity values and calculating an average value of the plurality of second sub-similarity values as the second similarity value; or
calculating similarity between the image information of the first object and each of the second sub-images to obtain a plurality of second sub-similarity values and selecting a maximum value of the plurality of second sub-similarity values as the second similarity value; or
calculating similarity between the image information of the first object and each of the second sub-images to obtain a plurality of second sub-similarity values and calculating a maximum variance of the plurality of second sub-similarity values as the second similarity value; or
calculating similarity between the image information of the first object and each of the second sub-images to obtain a plurality of second sub-similarity values and selecting a minimum value of the plurality of second sub-similarity values as the second similarity value; or
calculating similarity between the image information of the first object and each of the second sub-images to obtain a plurality of second sub-similarity values and calculating a minimum variance of the plurality of second sub-similarity values as the second similarity value.

4. The method of claim 1, wherein prior to capturing the image information of the first object, the method further comprises:
receiving a verification request for verifying identity of the first object;
determining whether the first object for which the verification request is being made is a misrecognizable object whose identification result deviates from a correct result;
if the first object is a misrecognizable object, capturing the image information of the first object and comparing the captured image information of the first object with the images satisfying predefined conditions; and
if the first object is not a misrecognizable object, capturing the image information of the first object and comparing the captured image information with the pre-stored image of the first object to determine whether the first object passes the verification.

5. The method of claim 4, wherein if the first object is determined as a misrecognizable object, prior to the capturing of the image information of the first object, the method comprises:
determining whether a level of misrecognizability associated with the first object exceeds a threshold;
if the level of misrecognizability exceeds the threshold, suspending the verification request; and
if the level of misrecognizability is lower than the threshold, issuing a plurality of capture instructions configured to instruct the first object to perform a plurality of actions.

6. The method of claim 5, wherein the plurality of capture instructions trigger capturing a plurality of first image information of the first object, and comparing each of the plurality of first image information of the first object with the images satisfying predefined conditions to obtain a plurality of comparison results.

7. The method of claim 6, wherein if a number of identical ones of the plurality of comparison results exceed a predetermined threshold, determining that the first object passes the verification.

8. An object verification device, comprising:
a capture module configured to capture image information of a first object;
a comparison module configured to compare the captured image information of the first object with images satisfying predefined conditions to obtain a comparison result, wherein
the images satisfying predefined conditions comprise a pre-stored image of the first object and a pre-stored image of a second object having similar features to the first object, the comparison comprising
calculating similarity between the captured image information of the first object and the pre-stored image of the first object to obtain a first similarity value; and
calculating similarity between the captured image information of the first object and the pre-stored image of the second object to obtain a second similarity value,
wherein the first similarity value is configured to represent self-similarity of the first object, and the second similarity value is configured to represent a similarity between the first object and the second object,
**characterised in that**:
the pre-stored image of the first object comprises a plurality of first sub-images captured at different times, and calculating similarity between the captured image information of the first object and the pre-stored image of the first object to obtain the first similarity value comprises
calculating similarity between the image information of the first object and each of the first sub-images to obtain a plurality of first sub-similarity values and calculating an average value of the plurality of first sub-similarity values as the first similarity value;
or
calculating similarity between the image information of the first object and each of the first sub-images to obtain a plurality of first sub-similarity values and selecting a maximum value of the plurality of first sub-similarity values as the first similarity value;
or
calculating similarity between the image information of the first object and each of the first sub-images to obtain a plurality of first sub-similarity values and calculating a maximum variance of the plurality of first sub-similarity values as the first similarity value; or
calculating similarity between the image information of the first object and each of the first sub-images to obtain a plurality of first sub-similarity values and selecting a minimum value of the plurality of first sub-similarity values as the first similarity value;
or
calculating similarity between the image information of the first object and each of the first sub-images to obtain a plurality of first sub-similarity values and calculating a minimum variance of the plurality of first sub-similarity values as the first similarity value; and
a determination module configured to determine whether the first object passes the verification based on the comparison result.

9. An object verification device according to claim 8, the device being a mobile device.

10. A storage medium, configured to store a program, wherein a device comprising the storage medium is configured to carry out following steps when the program is executed:
capturing image information of a first object;
comparing the captured image information of the first object with images satisfying predefined conditions to obtain a comparison result, wherein the images satisfying predefined conditions comprise a pre-stored image of the first object and a pre-stored image of a second object having similar features to the first object, the step of comparing comprising
calculating similarity between the captured image information of the first object and the pre-stored image of the first object to obtain a first similarity value; and
calculating similarity between the captured image information of the first object and the pre-stored image of the second object to obtain a second similarity value,
wherein the first similarity value is configured to represent self-similarity of the first object, and the second similarity value is configured to represent a similarity between the first object and the second object,
**characterised in that**:
the pre-stored image of the first object comprises a plurality of first sub-images captured at different times, and calculating similarity between the captured image information of the first object and the pre-stored image of the first object to obtain the first similarity value comprises:
calculating similarity between the image information of the first object and each of the first sub-images to obtain a plurality of first sub-similarity values and calculating an average value of the plurality of first sub-similarity values as the first similarity value;
or
calculating similarity between the image information of the first object and each of the first sub-images to obtain a plurality of first sub-similarity values and selecting a maximum value of the plurality of first sub-similarity values as the first similarity value;
or
calculating similarity between the image information of the first object and each of the first sub-images to obtain a plurality of first sub-similarity values and calculating a maximum variance of the plurality of first sub-similarity values as the first similarity value; or
calculating similarity between the image information of the first object and each of the first sub-images to obtain a plurality of first sub-similarity values and selecting a minimum value of the plurality of first sub-similarity values as the first similarity value;
or
calculating similarity between the image information of the first object and each of the first sub-images to obtain a plurality of first sub-similarity values and calculating a minimum variance of the plurality of first sub-similarity values as the first similarity value; and
determining whether the first object passes the verification based on the comparison result.

## Patentansprüche

1. Computerimplementiertes Objektverifizierungsverfahren, umfassend:
Erfassen (S102) von Bildinformationen eines ersten Objekts;
Vergleichen (S104) der erfassten Bildinformationen des ersten Objekts mit Bildern, die im Voraus definierte Bedingungen befriedigen, um ein Vergleichsergebnis zu erlangen, wobei die Bilder, die im Voraus definierte Bedingungen befriedigen, ein im Voraus gespeichertes Bild des ersten Objekts und ein im Voraus gespeichertes Bild eines zweiten Objekts mit ähnlichen Merkmalen wie das erste Objekt umfassen, der Schritt des Vergleichens umfassend
Berechnen von Ähnlichkeit zwischen den erfassten Bildinformationen des ersten Objekts und dem im Voraus gespeicherten Bild des ersten Objekts, um einen ersten Ähnlichkeitswert zu erlangen; und
Berechnen von Ähnlichkeit zwischen den erfassten Bildinformationen des ersten Objekts und dem im Voraus gespeicherten Bild des zweiten Objekts, um einen zweiten Ähnlichkeitswert zu erlangen,
wobei der erste Ähnlichkeitswert konfiguriert ist, Selbstähnlichkeit des ersten Objekts zu repräsentieren, und der zweite Ähnlichkeitswert konfiguriert ist, eine Ähnlichkeit zwischen dem ersten Objekt und dem zweiten Objekt zu repräsentieren,
**dadurch gekennzeichnet, dass**:
das im Voraus gespeicherte Bild des ersten Objekts eine Vielzahl von ersten Teilbildern, die zu verschiedenen Zeiten erfasst wurden, umfasst, und das Berechnen von Ähnlichkeit zwischen den erfassten Bildinformationen des ersten Objekts und dem im Voraus gespeicherten Bild des ersten Objekts, um den ersten Ähnlichkeitswert zu erlangen, umfasst:
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen eines durchschnittlichen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Auswählen eines maximalen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen einer maximalen Varianz der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Auswählen eines minimalen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen einer minimalen Varianz der Vielzahl von ersten Teilähnlichkeitswerten als der erste Ähnlichkeitswert; und
Bestimmen (S106) basierend auf dem Vergleichsergebnis, ob das erste Objekt die Verifizierung besteht.

2. Verfahren nach Anspruch 1, wobei das Bestimmen basierend auf dem Vergleichsergebnis, ob das erste Objekt die Verifizierung besteht, umfasst:
Vergleichen des ersten Ähnlichkeitswerts mit dem zweiten Ähnlichkeitswert;
Bestimmen, dass das erste Objekt die Verifizierung besteht, wenn der erste Ähnlichkeitswert größer als der oder gleich dem zweiten Ähnlichkeitswert ist; und
Bestimmen, dass das erste Objekt die Verifizierung nicht besteht, wenn der erste Ähnlichkeitswert kleiner als der zweite Ähnlichkeitswert ist.

3. Verfahren nach Anspruch 1 oder 2, wobei das im Voraus gespeicherte Bild des zweiten Objekts eine Vielzahl von zweiten Teilbildern, die zu verschiedenen Zeiten erfasst wurden, umfasst und Berechnen von Ähnlichkeit zwischen den erfassten Bildinformationen des ersten Objekts und dem im Voraus gespeicherten Bild des zweiten Objekts, um den zweiten Ähnlichkeitswert zu erlangen, umfasst:
Berechnen von Ähnlichkeit zwischen den Bildinformationen des ersten Objekts und jedem der zweiten Teilbilder, um eine Vielzahl von zweiten Teilähnlichkeitswerten zu erlangen, und Berechnen eines durchschnittlichen Werts der Vielzahl von zweiten Teilähnlichkeitswerten als der zweite Ähnlichkeitswert; oder
Berechnen von Ähnlichkeit zwischen den Bildinformationen des ersten Objekts und jedem der zweiten Teilbilder, um eine Vielzahl von zweiten Teilähnlichkeitswerten zu erlangen, und Auswählen eines maximalen Werts der Vielzahl von zweiten Teilähnlichkeitswerten als der zweite Ähnlichkeitswert; oder
Berechnen von Ähnlichkeit zwischen den Bildinformationen des ersten Objekts und jedem der zweiten Teilbilder, um eine Vielzahl von zweiten Teilähnlichkeitswerten zu erlangen, und Berechnen einer maximalen Varianz der Vielzahl von zweiten Teilähnlichkeitswerten als der zweite Ähnlichkeitswert; oder
Berechnen von Ähnlichkeit zwischen den Bildinformationen des ersten Objekts und jedem der zweiten Teilbilder, um eine Vielzahl von zweiten Teilähnlichkeitswerten zu erlangen, und Auswählen eines minimalen Werts der Vielzahl von zweiten Teilähnlichkeitswerten als der zweite Ähnlichkeitswert; oder
Berechnen von Ähnlichkeit zwischen den Bildinformationen des ersten Objekts und jedem der zweiten Teilbilder, um eine Vielzahl von zweiten Teilähnlichkeitswerten zu erlangen, und Berechnen einer minimalen Varianz der Vielzahl von zweiten Teilähnlichkeitswerten als der zweite Ähnlichkeitswert.

4. Verfahren nach Anspruch 1, wobei das Verfahren vor dem Erfassen der Bildinformationen des ersten Objekts ferner umfasst:
Empfangen einer Verifizierungsanforderung zum Verifizieren der Identität des ersten Objekts;
Bestimmen, ob das erste Objekt, für das die Verifizierungsanforderung durchgeführt wird, ein falsch erkennbares Objekt ist, dessen Identifizierungsergebnis von einem richtigen Ergebnis abweicht;
wenn das erste Objekt ein falsch erkennbares Objekt ist, Erfassen der Bildinformationen des ersten Objekts und Vergleichen der erfassten Bildinformationen des ersten Objekts mit den Bildern, die im Voraus definierte Bedingungen befriedigen; und
wenn das erste Objekt kein falsch erkennbares Objekt ist, Erfassen der Bildinformationen des ersten Objekts und Vergleichen der erfassten Bildinformationen mit dem im Voraus gespeicherten Bild des ersten Objekts, um zu bestimmen, ob das erste Objekt die Verifizierung besteht.

5. Verfahren nach Anspruch 4, wobei, wenn das erste Objekt als ein falsch erkennbares Objekt bestimmt wird, das Verfahren vor dem Erfassen der Bildinformationen des ersten Objekts umfasst:
Bestimmen, ob ein Niveau der falschen Erkennbarkeit, das mit dem ersten Objekt assoziiert ist, einen Schwellenwert übersteigt;
wenn das Niveau der falschen Erkennbarkeit den Schwellenwert übersteigt, Aussetzen der Verifizierungsanforderung; und
wenn das Niveau der falschen Erkennbarkeit niedriger als der Schwellenwert ist, Ausgeben einer Vielzahl von Erfassungsanweisungen, die konfiguriert sind, das erste Objekt anzuweisen, eine Vielzahl von Aktionen durchzuführen.

6. Verfahren nach Anspruch 5, wobei die Vielzahl von Erfassungsanweisungen das Erfassen einer Vielzahl von ersten Bildinformationen des ersten Objekts und Vergleichen jeder der Vielzahl von ersten Bildinformationen des ersten Objekts mit den Bildern, die im Voraus definierte Bedingungen befriedigen, um eine Vielzahl von Vergleichsergebnissen zu erlangen, auslöst.

7. Verfahren nach Anspruch 6, wobei, wenn eine Anzahl von identischen einen der Vielzahl von Vergleichsergebnissen einen im Voraus bestimmten Schwellenwert übersteigt, bestimmt wird, dass das erste Objekt die Verifizierung besteht.

8. Objektverifizierungsvorrichtung, umfassend:
ein Erfassungsmodul, konfiguriert zum Erfassen von Bildinformationen eines ersten Objekts;
ein Vergleichsmodul, konfiguriert zum Vergleichen der erfassten Bildinformationen des ersten Objekts mit Bildern, die im Voraus definierte Bedingungen befriedigen, um ein Vergleichsergebnis zu erlangen, wobei die Bilder, die im Voraus definierte Bedingungen befriedigen, ein im Voraus gespeichertes Bild des ersten Objekts und ein im Voraus gespeichertes Bild eines zweiten Objekts mit ähnlichen Merkmalen wie das erste Objekt umfassen, der Vergleich umfassend
Berechnen von Ähnlichkeit zwischen den erfassten Bildinformationen des ersten Objekts und dem im Voraus gespeicherten Bild des ersten Objekts, um einen ersten Ähnlichkeitswert zu erlangen; und
Berechnen von Ähnlichkeit zwischen den erfassten Bildinformationen des ersten Objekts und dem im Voraus gespeicherten Bild des zweiten Objekts, um einen zweiten Ähnlichkeitswert zu erlangen,
wobei der erste Ähnlichkeitswert konfiguriert ist, Selbstähnlichkeit des ersten Objekts zu repräsentieren, und der zweite Ähnlichkeitswert konfiguriert ist, eine Ähnlichkeit zwischen dem ersten Objekt und dem zweiten Objekt zu repräsentieren,
**dadurch gekennzeichnet, dass**:
das im Voraus gespeicherte Bild des ersten Objekts eine Vielzahl von ersten Teilbildern, die zu verschiedenen Zeiten erfasst wurden, umfasst, und Berechnen von Ähnlichkeit zwischen den erfassten Bildinformationen des ersten Objekts und dem im Voraus gespeicherten Bild des ersten Objekts, um den ersten Ähnlichkeitswert zu erlangen, umfasst
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen eines durchschnittlichen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Auswählen eines maximalen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen einer maximalen Varianz der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Auswählen eines minimalen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen einer minimalen Varianz der Vielzahl von ersten Teilähnlichkeitswerten als der erste Ähnlichkeitswert; und
ein Bestimmungsmodul, konfiguriert zum Bestimmen basierend auf dem Vergleichsergebnis, ob das erste Objekt die Verifizierung besteht.

9. Objektverifizierungsvorrichtung nach Anspruch 8, wobei die Vorrichtung eine mobile Vorrichtung ist.

10. Speichermedium, konfiguriert zum Speichern eines Programms, wobei eine Vorrichtung, die das Speichermedium umfasst, konfiguriert ist zum Ausführen der nachstehenden Schritte, wenn das Programm ausgeführt wird:
Erfassen von Bildinformationen eines ersten Objekts;
Vergleichen der erfassten Bildinformationen des ersten Objekts mit Bildern, die im Voraus definierte Bedingungen befriedigen, um ein Vergleichsergebnis zu erlangen, wobei die Bilder, die im Voraus definierte Bedingungen befriedigen, ein im Voraus gespeichertes Bild des ersten Objekts und ein im Voraus gespeichertes Bild eines zweiten Objekts mit ähnlichen Merkmalen wie das erste Objekt umfassen, der Schritt des Vergleichens umfassend
Berechnen von Ähnlichkeit zwischen den erfassten Bildinformationen des ersten Objekts und dem im Voraus gespeicherten Bild des ersten Objekts, um einen ersten Ähnlichkeitswert zu erlangen; und
Berechnen von Ähnlichkeit zwischen den erfassten Bildinformationen des ersten Objekts und dem im Voraus gespeicherten Bild des zweiten Objekts, um einen zweiten Ähnlichkeitswert zu erlangen,
wobei der erste Ähnlichkeitswert konfiguriert ist, Selbstähnlichkeit des ersten Objekts zu repräsentieren, und der zweite Ähnlichkeitswert konfiguriert ist, eine Ähnlichkeit zwischen dem ersten Objekt und dem zweiten Objekt zu repräsentieren,
**dadurch gekennzeichnet, dass**:
das im Voraus gespeicherte Bild des ersten Objekts eine Vielzahl von ersten Teilbildern, die zu verschiedenen Zeiten erfasst wurden, umfasst, und Berechnen von Ähnlichkeit zwischen den erfassten Bildinformationen des ersten Objekts und dem im Voraus gespeicherten Bild des ersten Objekts, um den ersten Ähnlichkeitswert zu erlangen, umfasst:
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen eines durchschnittlichen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Auswählen eines maximalen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen einer maximalen Varianz der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Auswählen eines minimalen Werts der Vielzahl von ersten Teilähnlichkeitswerten als der erste Ähnlichkeitswert; oder
Berechnen von Ähnlichkeit zwischen den Bildinformationen des ersten Objekts und jedem der ersten Teilbilder, um eine Vielzahl von ersten Teilähnlichkeitswerten zu erlangen, und Berechnen einer minimalen Varianz der Vielzahl von ersten Teilähnlichkeitswerten als der erste Ähnlichkeitswert; und
Bestimmen basierend auf dem Vergleichsergebnis, ob das erste Objekt die Verifizierung besteht.

## Revendications

1. Procédé de vérification d'objets mis en oeuvre par ordinateur, comprenant :
la capture (S102) d'informations d'image d'un premier objet ;
la comparaison (S104) des informations d'image capturées du premier objet à des images satisfaisant des conditions prédéfinies, pour obtenir un résultat de comparaison, dans lequel les images satisfaisant des conditions prédéfinies comprennent une image pré-stockée du premier objet, et une image pré-stockée d'un second objet présentant des caractéristiques similaires à celles du premier objet, l'étape de comparaison comprenant :
le calcul d'une similarité entre les informations d'image capturées du premier objet et l'image pré-stockée du premier objet, pour obtenir une première valeur de similarité ; et
le calcul d'une similarité entre les informations d'image capturées du premier objet et l'image pré-stockée du second objet, pour obtenir une seconde valeur de similarité ;
dans lequel la première valeur de similarité est configurée de manière à représenter une autosimilarité du premier objet, et la seconde valeur de similarité est configurée de manière à représenter une similarité entre le premier objet et le second objet ;
**caractérisé en ce que** :
l'image pré-stockée du premier objet comprend une pluralité de premières sous-images capturées à différents instants, et le calcul de la similarité entre les informations d'image capturées du premier objet et l'image pré-stockée du premier objet, pour obtenir la première valeur de similarité, comprend :
le calcul d'une similarité entre les informations d'image du premier objet et chacune des premières sous-images, pour obtenir une pluralité de premières valeurs de sous-similarité, et le calcul d'une valeur moyenne de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et la sélection d'une valeur maximale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et le calcul d'une variance maximale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et la sélection d'une valeur minimale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et le calcul d'une variance minimale de la pluralité de premières valeurs de sous-similarité, en tant que première valeur de similarité ; et
la détermination (S106) si le premier objet réussit la vérification sur la base du résultat de comparaison.

2. Procédé selon la revendication 1, dans lequel la détermination si le premier objet réussit la vérification sur la base du résultat de comparaison comprend :
la comparaison de la première valeur de similarité à la seconde valeur de similarité ;
la détermination que le premier objet réussit la vérification si la première valeur de similarité est supérieure ou égale à la seconde valeur de similarité ; et
la détermination que le premier objet échoue à la vérification si la première valeur de similarité est inférieure à la seconde valeur de similarité.

3. Procédé selon la revendication 1 ou 2, dans lequel l'image pré-stockée du second objet comprend une pluralité de secondes sous-images capturées à différents instants, et le calcul de la similarité entre les informations d'image capturées du premier objet et l'image pré-stockée du second objet, pour obtenir la seconde valeur de similarité, comprend :
le calcul d'une similarité entre les informations d'image du premier objet et chacune des secondes sous-images, pour obtenir une pluralité de secondes valeurs de sous-similarité, et le calcul d'une valeur moyenne de la pluralité de secondes valeurs de sous-similarité, en tant que seconde valeur de similarité ; ou
le calcul d'une similarité entre les informations d'image du premier objet et chacune des secondes sous-images, pour obtenir une pluralité de secondes valeurs de sous-similarité, et la sélection d'une valeur maximale de la pluralité de secondes valeurs de sous-similarité, en tant que seconde valeur de similarité ; ou
le calcul d'une similarité entre les informations d'image du premier objet et chacune des secondes sous-images, en vue d'obtenir une pluralité de secondes valeurs de sous-similarité, et le calcul d'une variance maximale de la pluralité de secondes valeurs de sous-similarité, en tant que seconde valeur de similarité ; ou
le calcul d'une similarité entre les informations d'image du premier objet et chacune des secondes sous-images, pour obtenir une pluralité de secondes valeurs de sous-similarité, et la sélection d'une valeur minimale de la pluralité de secondes valeurs de sous-similarité, en tant que seconde valeur de similarité ; ou
le calcul d'une similarité entre les informations d'image du premier objet et chacune des secondes sous-images, pour obtenir une pluralité de secondes valeurs de sous-similarité, et le calcul d'une variance minimale de la pluralité de secondes valeurs de sous-similarité, en tant que seconde valeur de similarité.

4. Procédé selon la revendication 1, dans lequel, avant la capture des informations d'image du premier objet, le procédé comprend en outre :
la réception d'une demande de vérification pour vérifier l'identité du premier objet ;
la détermination si le premier objet pour lequel la demande de vérification est faite est un objet non reconnaissable dont le résultat d'identification s'écarte d'un résultat correct ;
si le premier objet est un objet non reconnaissable, capturer les informations d'image du premier objet et comparer les informations d'image capturées du premier objet aux images satisfaisant des conditions prédéfinies ; et
si le premier objet n'est pas un objet non reconnaissable, capturer les informations d'image du premier objet, et comparer les informations d'image capturées à l'image pré-stockée du premier objet en vue de déterminer si le premier objet réussit la vérification.

5. Procédé selon la revendication 4, dans lequel, si le premier objet est déterminé comme étant un objet non reconnaissable, avant la capture des informations d'image du premier objet, le procédé comprend
la détermination si un niveau de non-reconnaissance associé au premier objet dépasse un seuil ;
si le niveau de non-reconnaissance dépasse le seuil, la suspension de la demande de vérification ; et
si le niveau de non-reconnaissance est inférieur au seuil, l'émission d'une pluralité d'instructions de capture configurées de manière à ordonner au premier objet de mettre en oeuvre une pluralité d'actions.

6. Procédé selon la revendication 5, dans lequel la pluralité d'instructions de capture déclenche la capture d'une pluralité de premières informations d'image du premier objet et la comparaison de chacune de la pluralité de premières informations d'image du premier objet aux images satisfaisant des conditions prédéfinies, pour obtenir une pluralité de résultats de comparaison.

7. Procédé selon la revendication 6, dans lequel, si un nombre de résultats identiques de la pluralité de résultats de comparaison dépasse un seuil prédéterminé, le procédé comprend la détermination que le premier objet réussit la vérification.

8. Dispositif de vérification d'objets, comprenant :
un module de capture configuré de manière à capturer des informations d'image d'un premier objet ;
un module de comparaison configuré de manière à comparer les informations d'image capturées du premier objet à des images satisfaisant des conditions prédéfinies, pour obtenir un résultat de comparaison, dans lequel les images satisfaisant des conditions prédéfinies comprennent une image pré-stockée du premier objet, et une image pré-stockée d'un second objet présentant des caractéristiques similaires à celles du premier objet, la comparaison comprenant :
le calcul d'une similarité entre les informations d'image capturées du premier objet et l'image pré-stockée du premier objet, pour obtenir une première valeur de similarité ; et
le calcul d'une similarité entre les informations d'image capturées du premier objet et l'image pré-stockée du second objet, pour obtenir une seconde valeur de similarité ;
dans lequel la première valeur de similarité est configurée pour représenter une autosimilarité du premier objet, et la seconde valeur de similarité est configurée pour représenter une similarité entre le premier objet et le second objet ;
**caractérisé en ce que** :
l'image pré-stockée du premier objet comprend une pluralité de premières sous-images capturées à différents instants, et le calcul de la similarité entre les informations d'image capturées du premier objet et l'image pré-stockée du premier objet, pour obtenir la première valeur de similarité, comprend :
le calcul d'une similarité entre les informations d'image du premier objet et chacune des premières sous-images, pour obtenir une pluralité de premières valeurs de sous-similarité, et le calcule d'une valeur moyenne de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et la sélection d'une valeur maximale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et le calcul d'une variance maximale de la pluralité de premières valeurs de sous-similarité, en tant que première valeur de similarité ; ou
le calcul d'une similarité entre les informations d'image du premier objet et chacune des premières sous-images, en vue d'obtenir une pluralité de premières valeurs de sous-similarité, et la sélection d'une valeur minimale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et le calcul d'une variance minimale de la pluralité de premières valeurs de sous-similarité, en tant que première valeur de similarité ; et
un module de détermination configuré pour déterminer si le premier objet réussit la vérification sur la base du résultat de comparaison.

9. Dispositif de vérification d'objets selon la revendication 8, le dispositif étant un dispositif mobile.

10. Support de stockage, configuré de manière à stocker un programme, dans lequel un dispositif comprenant le support de stockage est configuré de manière à mettre en oeuvre les étapes ci-dessous, lorsque le programme est exécuté :
la capture d'informations d'image d'un premier objet ;
la comparaison des informations d'image capturées du premier objet à des images satisfaisant des conditions prédéfinies, pour obtenir un résultat de comparaison, dans lequel les images satisfaisant des conditions prédéfinies comprennent une image pré-stockée du premier objet, et une image pré-stockée d'un second objet présentant des caractéristiques similaires à celles du premier objet, l'étape de comparaison comprenant :
le calcul d'une similarité entre les informations d'image capturées du premier objet et l'image pré-stockée du premier objet, pour obtenir une première valeur de similarité ; et
le calcul d'une similarité entre les informations d'image capturées du premier objet et l'image pré-stockée du second objet, pour obtenir une seconde valeur de similarité ;
dans lequel la première valeur de similarité est configurée de manière à représenter une autosimilarité du premier objet, et la seconde valeur de similarité est configurée de manière à représenter une similarité entre le premier objet et le second objet ;
**caractérisé en ce que** :
l'image pré-stockée du premier objet comprend une pluralité de premières sous-images capturées à différents instants, et le calcul de la similarité entre les informations d'image capturées du premier objet et l'image pré-stockée du premier objet, pour obtenir la première valeur de similarité, comprend :
le calcul d'une similarité entre les informations d'image du premier objet et chacune des premières sous-images, pour obtenir une pluralité de premières valeurs de sous-similarité, et le calcul d'une valeur moyenne de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et la sélection d'une valeur maximale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et le calcul d'une variance maximale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et la sélection d'une valeur minimale de la pluralité de premières valeurs de sous-similarité, en tant que première valeur de similarité ; ou
le calcul d'une similarité entre les informations d'image du premier objet et chacune des premières sous-images, pour obtenir une pluralité de premières valeurs de sous-similarité, et le calcul d'une variance minimale de la pluralité de premières valeurs de sous-similarité, en tant que première valeur de similarité ; et
la détermination si le premier objet réussit la vérification sur la base du résultat de comparaison.
